(19) **Europäisches Patentamt European Patent Office Office européen des brevets**

(11) **EP 1 332 336 B1**

(12) **EUROPEAN PATENT SPECIFICATION**

(45) Date of publication and mention
of the grant of the patent:
**17.10.2012 Bulletin 2012/42**

(51) Int Cl.:
**G01C 21/30** (2006.01)

(21) Application number: **01983015.7**

(22) Date of filing: **08.11.2001**

(86) International application number:
**PCT/SE2001/002477**

(87) International publication number:
**WO 2002/039063 (16.05.2002 Gazette 2002/20)**

(54) **MAP-AIDED POSITIONING**

KARTENUNTERSTÜTZTE POSITIONIERUNG

POSITIONNEMENT ASSISTE PAR CARTE ROUTIERE

(84) Designated Contracting States:
**DE ES FR GB IT SE**

(30) Priority: **08.11.2000 SE 0004096**

(43) Date of publication of application:
**06.08.2003 Bulletin 2003/32**

(73) Proprietor: **Nira Dynamics AB
583 30 Linköping (SE)**

(72) Inventors:
• **FORSSELL, Urban
S-586 66 Linköping (SE)**
• **HALL, Peter
SE-582 16 Linköping (SE)**
• **GUSTAFSSON, Fredrik
S-586 63 Linköping (SE)**

(74) Representative: **Kitzler, Michael et al
IPQ IP Specialists AB
Docketing
Box 42
683 21 Hagfors (SE)**

(56) References cited:
**EP-A1- 0 276 366    EP-A1- 0 487 864
EP-A1- 0 703 435    EP-A2- 0 514 887
EP-A2- 0 875 877    GB-A- 2 209 414
US-A- 4 796 191    US-A- 5 862 510**

• **ENNS R.; MORRELL D.: "TERRAIN-AIDED
NAVIGATION USING THE VITERBI ALGORITHM",
JOURNAL OF GUIDANCE AND CONTROL AND
DYNAMICS, vol. 18, no. 6, 1 November 1995
(1995-11-01), pages 1444-1449, XP000558661,
RESTON, VA, US**

**Description**

**Field of the invention**

The present invention relates to a method and a system for positioning of a moveable object. More specifically, the invention relates to a map-aided positioning system wherein map information and relative position information is combined to estimate an absolute position indication.

**Background**

Today's positioning and navigation systems for vehicles almost exclusively rely on external position information such as satellite information obtained from a GPS (Global Positioning System) receiver, or similar, in combination with digital map information stored in a read-only memory (ROM) such as a CD or DVD ROM. These types of systems have been in use for a number of years now and are starting to expand their market share considerably. A driving force is the increased possibilities to remotely communicate with the vehicle using mobile telephony and other wireless communication channels. However, positioning is not only used for navigation, i.e. to find the shortest or fastest way to a destination, it is also the backbone of other emerging services such as post crash alarms, anti-theft tracking devices and "yellow-pages" services, the latter services providing answers to questions such as "Where is the nearest repair shop?" and the like.

The satellite-based systems of today are not ideal, especially not in urban areas with high buildings, multi-level highways, and tunnels where satellite coverage often are poor, and where the GPS-signals are corrupted by multi-path and fading. To enhance performance under these circumstances, the systems frequently feature dead reckoning capability, i.e. the systems use relative positioning information obtained from e.g. an inertial navigation system to predict future positions. However, despite these efforts to improve positioning accuracy, the performance of GPS based systems is sometimes surprisingly poor. Furthermore, GPS based systems typically show the worst performance when they are needed the most, for example in dense urban areas.

A further feature of some prior art GPS-based positioning systems is the addition of map matching to enhance the precision e.g. when turning around sharp corners and following characteristic road patterns. In principle, map matching is about moving a symbol indicating the position of a vehicle on a map from a calculated position to the nearest road found on the map. If done correctly this method can reduce the positioning error and also improve the user interface for example in terms of the user's perception of the positioning accuracy. A problem in many systems is however that the positioning and map-matching functions are not integrated and do not support each other, which sometimes results in sub-optimal performance. As an example, consider a case where the GPS signal is lost and the system relies on dead reckoning information only for a period of time. Since many current dead reckoning systems are rather simple and quite quickly accumulate errors, the calculated position may then deviate considerably from the true position on the road. Further, the map matching algorithm will try to match the calculated position to an assumed true position somewhere on the road network, which under these circumstances can result in a completely wrong indication of the true position or at least an indication that is delayed and tries to "catch up" with the true position but never reaches it. This type of weak performance is common in today's navigation systems.

Another drawback is that a satellite receiver is a rather expensive component, which makes the complete system expensive. The overall cost is further boosted by the fact that the manufacturers only offer complete, pre-installed, and integrated systems with satellite receiver, CD player, microprocessor etc. all integrated to one built-in unit. This unit typically requires custom software and custom digital road maps, which are manufacturer dependent and cannot be re-used when you buy a new system from another supplier. Typically you cannot use the system in other vehicles or platforms than the one it is installed in either. So for example if you have two vehicles and want to use the same navigation system in both, this is impossible or at least complicated.

**Prior Art**

A GPS car navigation system is disclosed in US Patent No. 6,041.280 to Kohli et al. This system derives GPS position update information from motion of the car along the actual track. Turns along the track are detected when they actually occur and are compared with the predicted turns so that the time and position at the actual turn can be used to update the then current GPS derived position of the vehicle. The aim of this updating of position information with actual turn data is to improve the accuracy of the GPS navigation especially during single satellite navigation.

Another piece of prior art map-matching navigation system is found in US Patent No. 5,774,824 to Streit et al. This system is designed for monitoring vehicle state characteristics including the location of a vehicle on a map route. There are two operating modes, namely a fixed mode wherein the map route is inputted by a user or a flexible mode wherein the map matching navigation system determines the map route from a plurality of measured points which corresponds to the location of the vehicle. The map matching navigation system additionally updates the location of the vehicle at a plurality of positions on the map route wherein the vehicle location is known with an increased level of confidence. Furthermore, a system for terrain navigation using Bayesian estimation is known from "Recursive Bayesian Estimation: Navigation and Tracking Applications", Niclas Bergman, Ph.D. thesis, Linköping University, 1999. The main result in Bergman's thesis is a navigation system for aerospace applications using terrain altitude information stored in a GIS (Geographical Information System) combined with altitude measurements from radar.

The patent document US 4 796 191 A describes a vehicle navigational system and method for tracking a vehicle. A programmed computer, sensors for sensing the distance traveled and heading of the vehicle, and a stored map database are used to calculate a dead reckoned position of the vehicle. This calculation provides data for identifying a contour of equal probability containing the dead reckoned positions and having a probability of containing the actual location of the vehicle. A number of multiparameters are derived from the map database. A given dead reckoned position and the contour are updated by means of a number of conditions and thresholds.

GB 2 209 414 A discloses a navigational system primarily designed for use in aircraft and terrain contour navigation (TCN). The system requires three types of measurement data. First, ground clearance data (height above ground level) may be obtained by e.g. laser or radio altimeter. Second, vertical motion of the aircraft may be obtained from a barometric or baro-inertial sensor. Third, some form of dead reckoning system is required to measure the relative horizontal positions of the ground clearance measurements. These data are used to reconstruct the terrain profile under the aircraft's track, which is then used to find a matching profile on a digital map of terrain height for updating the estimated position. An extended (nonlinear) **Kalman** filter algorithm is recursively applied to calculate probability density functions describing position estimate candidates to select from.

Russell Enns and Darryl Morrell disclose (Journal of Guidance, Control and Dynamics 1995, Vol. 18, No. 6, pages 1444-1449) a terrain-aided navigation (TAN) for use in aircraft. The system is designed to overcome the fairly poor performance shown by previous systems when in use in low-velocity aircraft and when flying over flat or very rough terrain. This is achieved by using a Viterbi algorithm (VA). The VA is a maximum a posteriori state sequence estimator that incorporates both system dynamics and observations into a simple algorithm. It does not require linearization and is robust with respect to partially observable system models.

Other prior art documents exemplifying the present state of the art:

EP 0 514 887 A2;

EP 0 875 877 A2;

EP 0 703 435 A1;

EP 0 276 366 A1;

US 5 862 510 A; and

EP 0 487 864 A1.

Despite the efforts in prior art there is a need for a more accurate positioning system, that is less sensitive to a difficult topography. Furthermore, there is a need for a less costly and more versatile device for positioning.

**Object of the Invention**

It is therefore an overall object of the present invention to solve the problem of providing a positioning system for determining the position of a wheeled vehicle, the system providing an improved accuracy in positioning independent of the current topography.

An aspect of the problem is to provide a positioning system that is readily implementable in a handy application device and that is suitable for use in wheeled vehicles.

Another aspect of the problem is to provide such a system that has a high degree of availability and a relatively low cost

**Summary of the Invention**

The invention is thus directed to a positioning system based on a combination of dead reckoning and map information, starting from an at least roughly determined initial estimate of a true position. The initial position parameters are input into a dead reckoning system that receives state characteristic information that represent state characteristic parameters of a wheeled vehicle. The dead reckoning system gathers updated state characteristic information as the wheeled vehicle moves and calculates a dead reckoning position relative to the initial position estimate. The dead reckoning position information is then combined with map information, preferably in a digital form, and processed in a non-linear filter in order to give a resulting estimate of the true absolute position.

The underlying idea of the present invention is to recursively estimate the conditional probability density for the position of a wheeled vehicle based on a measurement related to the object's position. In the following description text, the system and method according to the invention will for the sake of simplicity mostly be described with reference to a vehicle as the moveable object.

In another wording the present invention thus refers to a system that recursively estimates the conditional probability density for the vehicle's position using relative position information and a road map. The relative position information can preferably be obtained using dead reckoning using state characteristic indicators in the shape of wheel speed signals supported by inertial sensors such as accelerometers and yaw rate gyros. The recursive estimation of the conditional probability for the vehicle's position is implemented using a non-linear filtering algorithm.

In accordance with one aspect of the invention, digital map information and information from a dead reckoning system is used in a non-linear filtering algorithm, for example an adaptive filter, that preferably is based on Bayesian estimation principles. The dead reckoning system is preferably implemented in the shape of an inertial navigation system (INS) that is based on state characteristic parameter values derived from inertial sensors on the moveable object.

In other aspects and embodiments the positioning algorithm can within the same conceptual framework also be implemented in other ways, for example based on a non-probabilistic reasoning. The invention is in the present description mainly explained from the point of view of a statistical approach. However, the inventive concept may also be implemented by means of artificial intelligence, fuzzy logic, neural networks and the like. According to another aspect, the invention is directed to achieve a positioning system for a cheap, flexible navigation system to be used in cities. This embodiment of the invention operates with a fairly detailed map having many check possibilities in terms of a dense street mesh.

In another aspect the invention is directed to a positioning system configured to interact with GPS positioning in an improved GPS based navigation system.

An embodiment of the inventive positioning method for determining the position of a moveable object, comprises the steps of:

- receiving as an input an initial position indication;
- receiving as an input topology information dependent on said initial position indication, said topology information including a plurality of possible position indications;
- receiving as an input a moveable object state characteristic parameter value;
- calculating a relative position indication relative to said initial position indication dependent on said moveable object state characteristic value;
- generating a plurality of position estimate candidates dependent on a said possible position indications and on said relative position indication;
- selecting a position estimate indication among the position estimate candidates and dependent on a predetermined selection rule.

An apparatus or a system for implementing the inventive the mentioned method would inter alia comprise:

- an input for an initial position indication;
- an input for topographic information dependent on said initial position indication, said topographic information including a plurality of possible position indications;
- an input for a moveable object state characteristic parameter value;
- a calculation stage configured to calculate a relative position indication relative to said initial position indication dependent on said moveable object state characteristic value;
- a calculation stage configured to generate a plurality of position estimate candidates dependent on a said possible position indications and on said relative position indication;
- a selection stage configured to select a position estimate indication among the position estimate candidates and dependent on a predetermined selection rule.

In further specified developments of the invention the initial position is for example indicated as a limited geographical area; as an indication obtained from a wirelessly communicated positioning service or from a GPS receiver. The initial position may also be input manually or be obtained via a transponder situated at a fixed location. The topographic information is preferably obtained from map information of a map information source, such as a map database stored on a data storage or is received upon request from a remote a map source.

The state characteristic parameter values are received from a
a wheel speed sensor, of the movable object.

The relative position indication is for example calculated as the distance and/or the direction the movable object has moved from the initial position indication. The inventive method is in operation iteratively repeating the estimation steps, for example such that inter alia the generation of position estimate candidates comprises the step of repeatedly selecting a limited set among current position estimate candidates. The generation of position estimate candidates may also comprise the step of randomly selecting position candidates.

The selection or calculation rule for determining the position estimate indication is for example selected as the position estimate candidate having the shortest distance from one of the currently possible position indications. In preferred embodiments the position estimate is determined by means of an adaptive filter, recursively improving the position estimate candidates and the position estimate during operation along with the movement of the movable object.

The invention is applicable in different movable objects, for example in a wheeled vehicle, or a storage house truck. For each of the various moving objects, a correspondingly suitable description of the topology in which the movable object moves or operates as well as suitable state characteristic value sensors have to be provided.

The invention can be combined with other systems, for example such that it is configured to implement map-matching in a GPS based positioning/navigation system; configured to implement vehicle positioning using Mobile Positioning Services (MPS); or configured to monitor the performance of a GPS based navigation system. Furthermore, the invention can be applied in monitoring various sensors, such as an INS preferably a gyro or an accelerometer, or an DRS sensor, preferably the wheel speeds.

The invention can also be used to monitor other parameters such as the absolute vehicle speed (t ex for att kolla hastighetsmätaren) or the different tire pressures (kopplat till funktionen hos DRS).

A computer program product realising the invention would comprise computer program code portions configured to direct a data processing system to perform the steps and functions of the inventive method or system.

## Advantages

An advantage with the invention is that the positioning works accurately in a difficult topography, for example near high-rises and in tunnels, where for example GPS-dependent positioning performs poorly. The use of relatively simple hardware also entails that the invention enables the manufacturing of cheaper positioning and navigation equipment.

## Definitions

In the present description the following expressions are used to describe the invention.

Map information: The map information is in the present invention taken to be a description of the topology or the topography in an area in which the position of a movable object is to be determined. The map information are in different embodiments and dependent on the application a 2-dimensional or a 3-dimensional representation of the topography. Furthermore, the map information is preferably represented in a digital format or is digitised when used in order to allow digital data processing when calculating a positioning estimate.

Moveable object: The present positioning system is applicable in determining the position of a moveable or moving object. The moveable object can for example be a road vehicle such as a car, a lorry or a motorcycle.

Navigation: Navigation is in the present text understood to concern the from some point of view optimal path from a position A to a position B, where optimal for example can be the nearest or fastest path.

Positioning: Positioning is in the present text understood to concern determining a position in relation to a fixed reference.

## Brief Description of the Drawings

The present invention will be explained in more detail with reference to the accompanying drawing, in which:

Fig 1A shows a structural overview of a positioning system in accordance with the invention;
Fig 1B shows schematically a functional block diagram of an embodiment of a position estimate calculator in accordance with the invention;
Fig 1C shows schematically a vehicle positioning system according to an embodiment of the invention;
Fig 2 shows a schematic flow chart of steps and functions comprised in an embodiment of the invention;
Fig 3 and Fig 4 show schematic flow charts of steps and functions comprised in embodiments of the invention; and
Fig 5A-5C shows and example of a positioning sequence performed in accordance with the invention.

## Detailed Description of Embodiments

### General Navigation System Configuration

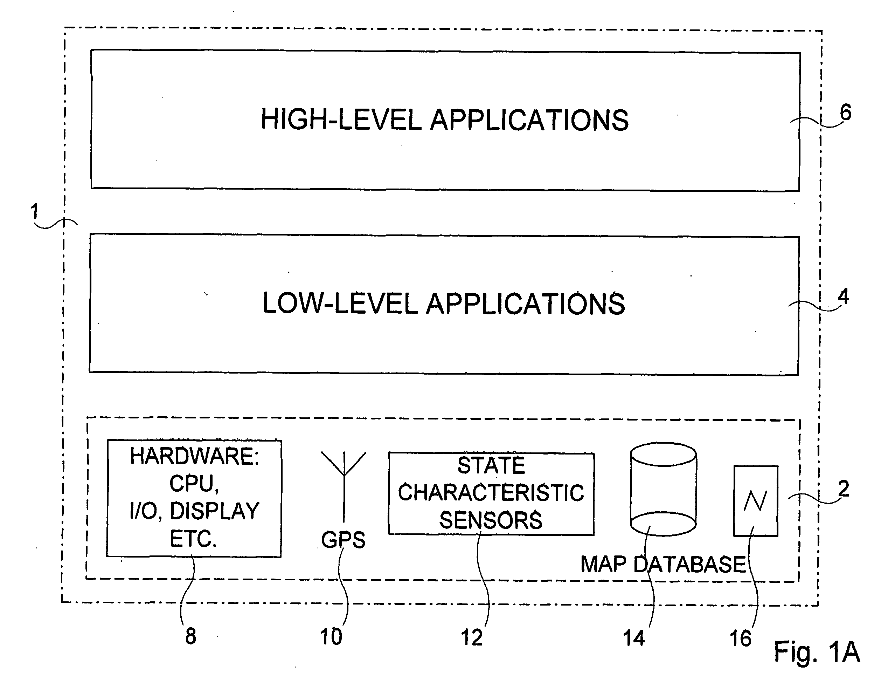

Fig 1A shows schematically the structure of a navigation system including a positioning system 1 for determining the position of a moveable object according to an embodiment of the invention. In Fig 1A the structure is described as a three-layer model comprising an infi-astructure layer 2, a low-level application layer 4 and a high-level application layer 6. The infrastructure layer 2 comprises hardware 8 for executing and interfacing the low-level and high-level applications of the application layers 4 and 6, hardware for running various software applications and for displaying positioning and navigation information to a user. The hardware 8 thus typically includes a central processing unit (CPU), input/output devises (I/O), a presentation display, a keyboard or the like. A further developed embodiment of the infrastructure layer 2 further comprises a GPS antenna and receiver 10 that delivers GPS position information. The infrastructure layer also includes sensors 12 to determine a state characteristic of a moving object, the sensors being already existing or application specific sensors. The state characteristic sensors includes in different embodiments for example relative position sensors, such as wheel speed and steering wheel sensors in a vehicle, or inertial sensors such as yaw rate gyros or accelerometers. Further, the infrastructure layer comprises a map database, for example in the shape of a read-only-memory such as CD ROM, DVD ROM or some other kind of storage. In some embodiments the map database information is available through some other source, for example conveyed to the positioning system through wired or wireless telecommunication. For this and different other functional reasons the infrastructure layer can also comprise a wired or wireless telecommunication device 16, for example a GSM (Global System of Mobile communication) or a GPRS (General Packet Radio System) telecommunication unit.

The low-level application layer 4 comprises different functional low-level applications such as positioning functions, database functions and HMI (human machine interface) functionality. The positioning functions are devised or configured to calculate an estimate of a true position dependent on state characteristic parameters derived from signals from the state characteristic sensors available in the infrastructure layer 2. As mentioned above these state characteristic parameters are determined or detected for example by means of GPS, relative position sensors and inertial sensors. The database functions are typically realised in software configured to perform efficient map handling operating on map information stored in a map database or other map information source. The HMI functionality comprises for example command menu systems, presentation of position information, map-matching functions and basic advanced navigation functions.

The high-level application layer 6 comprises different functional high-level applications such as advanced navigation functionality, advanced HMI features and application specific services and functionality dependent on the application of the navigation system. The advanced navigation functionality can for example includes route planning or route guidance. The advanced HMI-features can for example include voice control, turn-by-turn voice guidance and different graphical presentation features. The application specific services can for example in the vehicle applications include SOS alarm functions, tracking functions for anti-theft or rescue purposes, and various so called M-commerce functions like directed advertisement and travel services including customised directions to hotels, points of interest, gas stations, repair shops etc.

The present invention is mainly directed to functionality in the low-level application level configured to optimise the utilisation of information from all currently available information sources in the system, for example GSM, GPS, digital map, relative and inertial sensors, in order to determine a position with a high degree of accuracy.

There are a number of different possible configurations of sensors and available topology information when realising a positioning method or system within the inventive concept. For example in a wheeled vehicle application of the invention, it is currently believed that a possible minimum configuration of the invention would comprise sensors or sensor signals from two wheel speed sensors detecting the wheel speed of two wheels at each end of a wheel axis, combined with topology information from a map representing the geographical area in which the vehicle moves.

### Calculation of Position Estimate

The calculation of a position estimate, also called positioning, is in accordance with the invention, carried out by performing dead reckoning dependent on a state characteristic parameter and in relation to a known initial reference position and combining dead reckoning information with digital map information. Thus given an initial, possibly quite rough estimate of the position, a calculated true, absolute position is determined without any support from external position information sources such as GPS. However, embodiments of the invention are combined with a GPS initially and/or during operation. The state characteristic parameter is preferably taken from an inertial sensor mounted on the moveable object and forms together with dead reckoning calculation functionality an inertial navigation system (INS). The information from this inertial navigation system (INS) is then processed together with map information in a non-linear filtering algorithm. In preferred embodiments the filtering algorithm is based on Bayesian estimation principles.

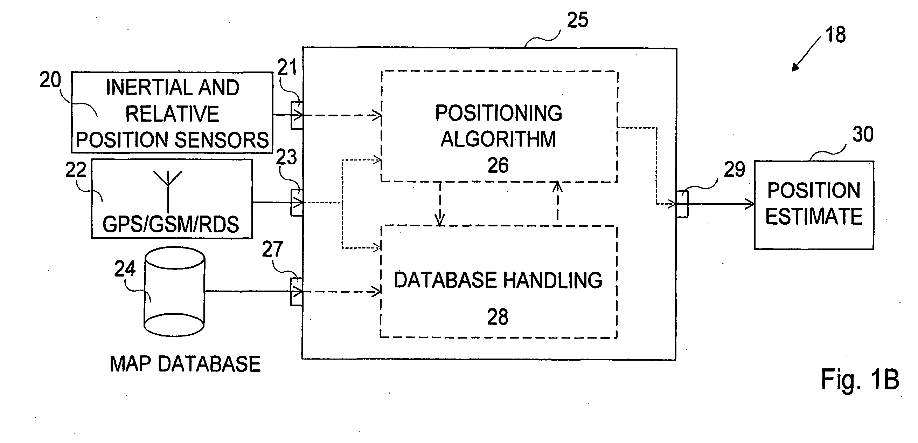

Fig 1B shows an embodiment of a position estimation functionality 18 in accordance with the invention. A position estimation calculator 25 is via a state characteristic parameter input 21 communicatively coupled to sensors for determining state characteristic parameters in the shape of inertial and/or relative position sensors 20 that are a part of a positioning device, have contact with or are mounted on or attached to the moveable object that is to be positioned. An initial position determiner 22, for example realised by means of a GPS receiver, a GSM unit or an RDS (Radio Data System), is in a similar manner communicatively coupled to the calculator via an initial reference position input 23. A map database 24, for example in the shape of a read-write memory such as a smart card possibly receiving wired or wire-less downloaded map information, or a read-only-memory such as a CD or DVD, configured to store digital map information is likewise communicatively coupled to the calculator via a map information input 27.

The position estimation calculator 25 comprises a positioning algorithm processor 26, preferably realised by means of a data processing system loaded with computer program code portions devised to direct the data processing system to perform a selected positioning algorithm. The calculator also comprises a map database handling functionality 28, likewise preferably realised by means of a data processing system executing corresponding computer program code portions. The positioning algorithm 26 and the map database handler 28 are also communicatively coupled, or even closely integrated, to interact in iterations of a recursive positioning algorithm. When the calculator has determined an estimate of the position in accordance with the selected algorithm a position estimate 30 is output via a position estimate output 29.

In one embodiment of the invention GSM positioning is used to determined an initial position. Thus, when starting the positioning system in a state where no current position indication is at hand or stored, the positioning system is via a GSM unit connected to a GSM positioning service offered by a mobile telephone operator. An initial position indication is determined in the form of a sector area in a mobile telephone cell, which gives a rough position estimate with an accuracy of nominally about 300-3000 meters from the true position. As an alternative an initial position indication can be manually input to establish an area from which the positioning system should start searching the position. Evidently other radio based services, e.g. RDS, or an initial GPS-position may also be used as an initial position input. Other conceivable sources for initial position indications are for example a point in a parking house for cars or busses, a garage or a repair shop, a toll station at a toll road, a fuel or energy loading station, or some other fixed point where the movable object in question passes. The positioning algorithm is thereby initialised, and as the positioning apparatus moves with a moveable object to be positioned state characteristic parameter values are obtained from the state characteristic parameter sensors and updated repeatedly. Relative position information is repeatedly calculated by means of dead reckoning and dependent on the state characteristic parameter values. An absolute position estimate is determined or calculated by combining the relative position information with map information in the non-linear filtering algorithm.

A variety of this embodiment is devised to be detachably connectable to for example a vehicle and its state characteristic sensors, and when detached be used for other purposes, for example as a portable positioning device for navigating in a delimited area.

In another embodiment of the invention the map-aided positioning is combined with GPS position information such that GPS information, dead reckoning results and map information is combined and statistically processed to achieve a statistically optimal position estimate. Loss of GPS information is handled automatically and a position estimate is calculated dependent on the best currently available information from several different sources. This embodiment of the invention thus constituting a further developed GPS positioning system is not dependent on flawless GPS information and is therefore capable to operate confidently in a difficult topography, such as a dense urban area, a tunnel and the like. This embodiment implemented as a product would typically comprise a software product including computer program code configured to direct a data processing system to implement the functionality and the algorithm of the invention. This software product takes inputs from a GPS, a dead reckoning system and a map database, and computes a position estimate. This embodiment is advantageously integrated in a navigation system and is then complemented with functionality for graphical representation, map matching, route planning and other similar functions.

### A Vehicle Positioning System

The invention is in this section explained in terms of a vehicle positioning system. In accordance with the concept of the invention, an estimate for the position of a vehicle is calculated by recursively estimating the conditional probability density for the position dependent on relative position information and digital map information. The relative position information is preferably obtained by means of dead reckoning using state characteristic parameter values taken from wheel speed sensor signals and inertial sensor signals such as accelerometers and yaw rate gyros. For the sake of simplicity, the relative and inertial sensors together with dead reckoning calculation algorithms will in this text sometimes be referred to as a dead reckoning system (DRS). There are a number of possible sensor and state characteristic value configurations and calculations. For example, the wheel speeds on outer and inner wheels can be compared. The recursive estimation of the conditional probability for the position of the vehicle is in different embodiments implemented for example with a non-linear filtering algorithm based on Bayesian estimation principles or an algorithm based on a non-probabilistic reasoning.

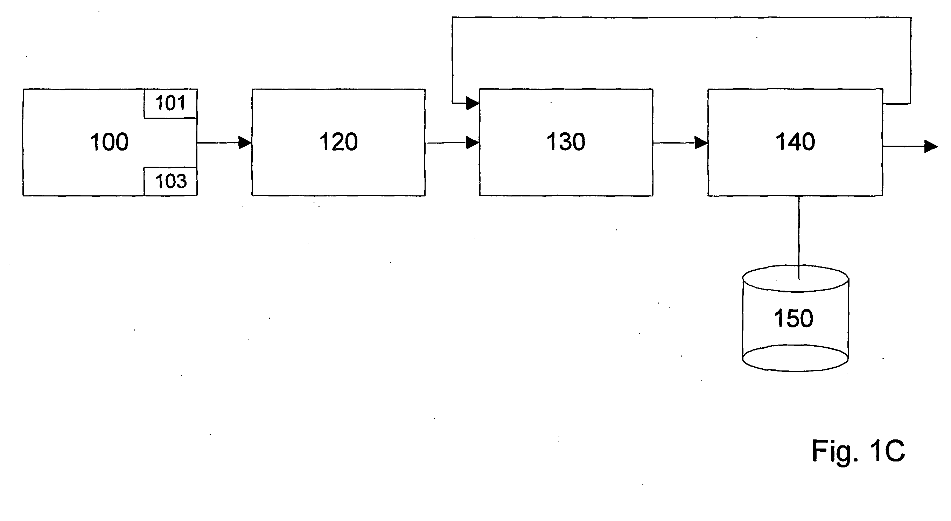

Figure 1C shows schematically an embodiment of the system according to the invention, which embodiment preferably is used in vehicle positioning. The system in Fig 1C comprises at least two vehicle state characteristic sensors 100, wherein one sensor for example is a wheel speed sensor 101 and another for example is an inertial sensor 103. In different varieties the system may comprise more than one wheel speed sensor 101 and more than one inertial sensor 103. The system comprises further a dead reckoning unit 120, which calculates the relative position, i.e. the displacement or the movement, $u_1$ of the vehicle using the state characteristic sensor signal obtained from the wheel speed sensor 101 and the sensor signal obtained from the inertial sensor 103. It should be understood that the dead reckoning system may be implemented using wheel speed sensors 101 and inertial navigation sensors 103 in different combinations. Alternatively, the relative position $u_t$ could be estimated in a conventional manner using for example GPS position information.

A first evaluation unit 130 is further comprised in the system. The first evaluation unit 130 iteratively updates a conditional probability density function (PDF) $f_{x_t|y_t}(x)$ for the vehicle's position obtained in the previous iteration using a relative position $u_t$. This results in the measurement update PDF $f_{x_{t+1}|y_t}(x)$. The calculation of the PDF $f_{x_{t+1}|y_t}(x)$ also handles un-modelled phenomena such as the drift in the inertial navigation system INS. The system further comprises a second evaluation unit 140, which updates the conditional probability density $f_{x_{t+1}|y_t}(x)$ using the road map giving $f_{x_{t+1}|y_t}(x)$. The road map is preferably stored on a storage means 150, such as a digital map database, possibly with read-write possibilities for on-line map updating.

This procedure is repeated as the system is running. In each iteration a new position estimate can be computed using either $f_{x_{t+1}|y_t}(x)$ or $f_{x_t|y_t}(x)$ by means of a predetermined rule, preferably a maximum a posteriori rule or a least-squares error rule. Initialisation of the algorithm can for instance be done by using the course or area positioning from a cellular telephone equipment.

Inference of further external positioning systems like GPS or cellular telephone equipment, can be incorporated in the measurement update performed by the second evaluation unit 140.

Mathematical Model

The present invention will in this section of the description text be described using a mathematical approach, wherein the following state space model is used:

$$x_{t+1} = x_t + u_t + w_t \qquad\qquad (1)$$

$$y_t = h(x_t) + e_t \qquad\qquad (2)$$

The state $x_t$ represents the vehicle's position on the map. At each iteration this is updated using $u_t$, which is the relative movement obtained from a dead reckoning system DRS or an inertial navigation system INS. Drift in the DRS or the INS is modelled by additive independent identically distributed noise, so called i.i.d. noise, w, , with a probability distribution $p_{w_1}(\cdot)$. The measurement, $y_t$, consists of the non-linear function $h(\cdot)$, evaluated at the current position, plus i.i.d. additive measurement noise, $e_t$, with probability distribution $p_{w_1}(\cdot)$. The i.i.d. additive measurement noise $e_t$ is assumed to be independent of $w_t$. It can be noted that $h(\cdot)$ is usually used to introduce map information in the model. In different embodiments $h(\cdot)$ can also be used to introduce for example GPS, GSM, fixed point measurements or compass information. The normal vehicle embodiment of the invention is based on the assumption that the vehicle is driving on a road in the road network. In this case $h(\cdot)$ for example represents the closest distance to the nearest road at time $t$, while $y_t$ represents a fictive measurement of this distance at time t calculated using the road map. The difference $y_t$ -h($x_t$) should ideally equal to zero in accordance with the assumption but in reality thus corresponds to the measurement noise modelled by $e_t$. The entity u further includes effects and phenomena from un-modelled or unmeaswed movements or noise in the movement or state characteristic parameter value measurements.

Let $f_{x_{t+1}|y_t}(x)$ denote the conditional probability density function PDF for the state $x_t$, given measurements for the vehicle position x up to the time t. Choosing a probabilistic point of view in a Bayesian framework, the conditional probability density function PDF can be recursively updated in two steps:

Firstly, a measurement update:

$$f_{x_t|Y_t}(x) = \frac{1}{c}f_{e_t}(y_t - h(x))f_{x_t|Y_{t-1}}(x) \qquad (3)$$

and secondly, a time update:

$$f_{x_{t+1}|Y_t}(x) = \int_{\Re^2} f_{x_t|Y_t}(\chi)f_{v_t}(x - \chi - u_t)d\chi \qquad (4)$$

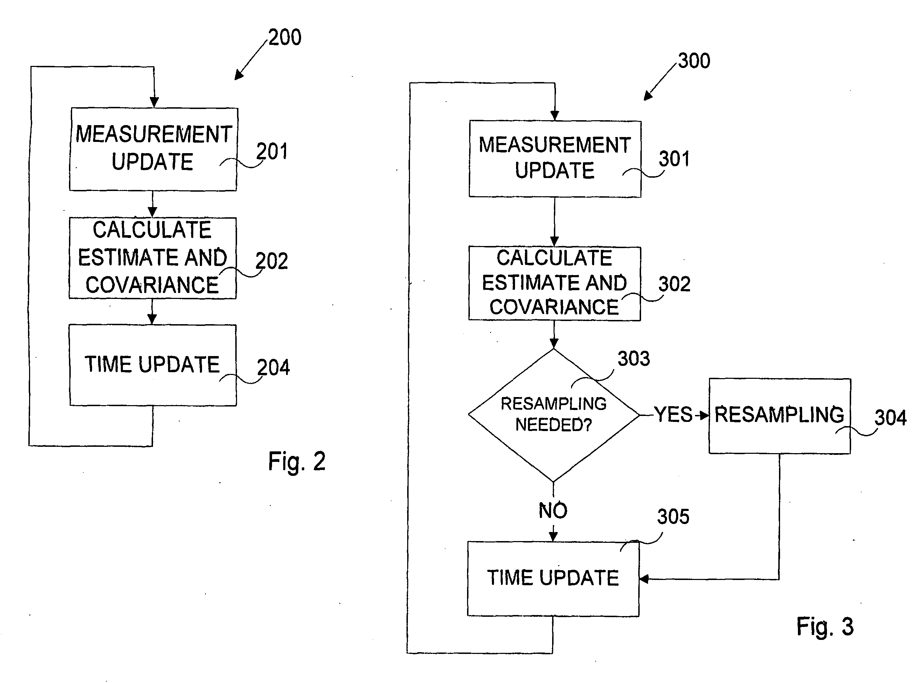

Using these expressions, the conditional probability density function, $f_{x_{t+1}|y_t}(x)$ can be computed recursively at each iteration $t$ given the information in the measurements up to the current iteration, denoted $Y_t$. These expressions cannot, however, be evaluated analytically due to the non-linear nature of the estimation problem. Therefore, some kind of discretisation of the state space is necessary. Here we will outline two possible implementations: a point mass filter (PMF) and a sequential Monte Carlo filter (MCF). The latter is often also referred to as a *particle filter.* In both cases the algorithm has a recursive structure illustrated in Fig 2.

Fig 2 shows a schematic flow chart illustrating the recursive structure of a non-linear filter 200 comprised in embodiments of the invention and devised to .generate an estimation of the position. The solution is in this example completely specified by the probability density function (PDF) as defined above.

- Step 201 comprises a measurement update or a time update, in which new information is introduced into the solution.

- Step 202 comprises calculating an estimate of the position, i.e. state $x_t$ and an associated error covariance.

- Step 204 comprises a time update, in which the particles are predicted based on the information from the DRS and the sensor error models.

This recursive algorithm is then iterated repeatedly during operation of the positioning apparatus of the invention.

## Implementation of inventive algorithm - embodiment using point mass filter (PMF)

The invention can be implemented in various manners and is in one embodiment implemented by means of a so called point mass filter PDF, wherein the Bayesian problem is solved using a quantisation of the state space.With the PMF the state space, i.e. the map, is discretised using a grid. If a uniform grid with N points and a resolution $\delta$ is used the algorithm in accordance with equations (3)-(4) above can be expressed as follows:

Initialisation:

The computations are initialised with a discretised prior distribution function, $p(x_o^i)$, which is modelled to express the prior knowledge of the true state, i.e. it can be rather non-informative or *flat.*

Measurement update:

- Update conditional distribution,

$$p(x_t^i \mid Y_t) = \frac{1}{c}p_{e_t}(y_t - h(x_t^i))p(x_t^i \mid Y_{t-1}) \qquad (5)$$

- Compute estimate,

$$\hat{x}_t^{MAP} = \arg\max_{x_t} p(x_t^i \mid Y_t) \qquad (6)$$

- Update covariance information, or perhaps more strictly expressed covariance related information or uncertainty information:

$$C_t = \sum_{i=1}^{N} (x_t^i - \hat{x}_t^{MAP})(x_t^i - \hat{x}_t^{MAP})^T p(x_t^i \mid Y_t)\delta^2 \qquad (7)$$

Time update:

- Translate grid points,

$$x_{t+1}^i = x_t^i + u_t \qquad i = 1,2,...,N \qquad (8)$$

- Update conditional distribution,

$$p(x_{t+1}^i \mid Y_t) = \sum_{j=1}^{N} p_{w_t}(x_{t+1}^i - x_t^j)p(x_t^j \mid Y_t)\delta^2 \quad (9)$$

The time update comprises a translation of the grid points plus convolution of the probability density function with the error distribution of the relative movement. The measurement updates or re-computes the weights using the information in the new measurements, where c is a scaling factor. The position estimate is here chosen as a *maximum a posteriori* estimate. Other options, such as least squares estimation, are also possible.

Implementation of inventive algorithm - embodiment using particle filter (PF)

In another, perhaps preferred embodiment, a particle filter also called a Monte Carlo filter (MCF) is used. Like in the previous embodiment, the Bayesian problem is solved using a quantisation of the state space. In the case of the particle filter, this means that the probability density function PDF is represented by a number of independent identically distributed i.i.d. samples referred to as particles. Fig 3 shows a schematic flow chart of steps comprised in a particle filter 300 in an embodiment of the invention.- Step 301 comprises a measurement update, in which new information is introduced into the solution. In the measurement update step a new *importance weight* is calculated for each particle based on the outcome of the measurement equations, when applied to the current particle. The weight can be considered as a sampled value of the posterior PDF. In order to keep the calculations sound in a probabilistic sense, the weights need to be normalised.

- Step 302 comprises the calculating of an estimate and confidence parameters in the shape of an associated covariance. The approximate solution to the estimation problem is completely specified by the particle swarm. However, the primary interest is usually to obtain various estimates and confidence parameters. There are mainly two ways of calculating estimates, through *expectation* or through *maximum a posteriori* (m.a.p.). Expectation is easily performed by calculating a weighted sum over all particles. The maximum a posteriori m.a.p. estimate is also very straightforward - just pick the particle with the largest weight. The *covariance matrix* is obtained by calculating the second moment, if the estimate was obtained by expectation. The same procedure applied to a maximum a posteriori (m.a.p.) estimate yields a *correlation matrix,* since the m.a.p. estimate is not necessarily unbiased.
- Step 303 comprises a test whether a resampling is needed. To make sure that the particles remain i.i.d. samples from the PDF, resampling has to be performed on a regular basis.
  This is done by drawing samples with replacement until a certain number of new particles is obtained. The probability of resampling a specific particle at each draw is equal to its weight. The testing therefore in one embodiment comprises a comparison of the effective sample size with a predetermined threshold. The effective sample size is a measure of the particle weight variance. If the particles are true i.i.d. samples the variance is low (0) and when the set degenerates, the variance increases. The threshold for when resampling should be performed is preferably specified by the system designer.

- Step 304 comprises the actual resampling also called bootstrap.
- Step 305 comprises a time update. In the time updating step the particles that can be considered as candidates to the true position are translated using relative displacement, measured by the DRS, and realisations of the process noise.

This algorithm is then repeated iteratively during operation of the invention.

The particle filter PF algorithm is summarised as follows. If it is assumed that the initial state $x_0$ is distributed according to $p_{x_0}(\cdot)$ the basic PF algorithm or Monte Carlo Filter MCF, which is also known as Bayesian bootstrap, can be described as follows.

Initialisation:

- Generate N samples (or particles), $\{x_o^i\}_{i=1}^N$, from $p_{x_0}(\cdot)$.

Measurement update:

- Compute normalised weights,

$$\omega_i = \frac{p_{e_t}(y_t - h(x_t^i))}{\sum_{j=1}^N p_{e_t}(y_t - h(x_t^j))} \qquad (10)$$

- Compute position estimate,

$$\hat{x}_t^{MAP} = \arg\max_{x_t} \omega_i \qquad (11)$$

- Update the covariance information,

$$C_t = \sum_{i=1}^N \omega_i (x_t^i - \hat{x}_t^{MAP})(x_t^i - \hat{x}_t^{MAP})^T \qquad (12)$$

- Resample N times with replacement from $\{x_t^i\}_{i=1}^N$ to obtain $\{x_t^{i*}\}_{i=1}^N$.

Time update:

- Generate N samples, $\{w_t^i\}_{i=1}^N$, from $p_{w_t}(\cdot)$.

- Translate all particles

$$x_{t+1}^i = x_t^{i*} + u_t + w_t^i \qquad i = 1,2,...,N \qquad\qquad (13)$$

In the initialisation step a particle cloud consisting ofN particles are randomly generated (i.e. sampled from the prior, $p_{x_0}(\cdot)$ ). In the measurement update the particle weights are re-computed and the estimate updated. Here a maximum a posteriori estimate is used,but it should be noted that a minimum squares estimate can be used as well, possibly even preferably. In the measurement update the covariance information is updated in the natural way. As a last step, the particle cloud is re-sampled. In the time update the re-sampled particle cloud is translated and randomly disturbed by an artificial noise contribution. Note that the calculation of the estimate is embedded in the measurement step here and that the bootstrap step is performed on each iteration.

**Map Database Handling**

The map database is one of the most fundamental components in map-aided positioning of the invention, and the map data handling is a vital part of the system. The map handling routines should be able to extract the information needed by the positioning algorithm from the database as quickly as possible. The measurement equations in the, for the sake of explanation, somewhat simplified model presented in the previous section use a single quantity provided by the map, namely the shortest distance from an arbitrary point to the road network. This can be obtained through a limiting search operation and minimising. These operations are crucial for the total functionality and performance of the algorithm and thus a lot of effort should be put on how to implement them as efficiently as possible. Advantageous embodiments comprise a data amount limiting function that operates to limit the amount of data that is processed in the time consuming optimising step.

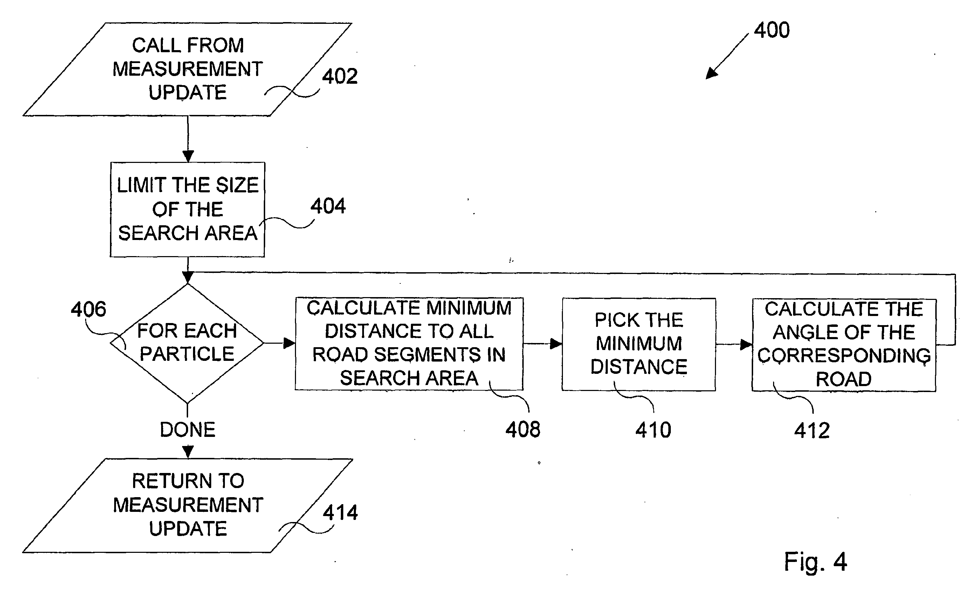

Fig 4 illustrates in a schematic flow diagram of how map information is retrieved in the measurement update step 400 of the algorithms described above in one embodiment of the invention. The exemplifying procedure

- Step 402 comprises an incoming call from a measurement updating function or step in the position estimating procedure.
- Step 404 comprises limiting the size of the search area in the map data base using e.g. the spatial extension of the particles and suitable confidence parameters..
- Step 406 comprises a loop of steps that is performed for each particle. Namely, in
- Step 408 calculating the minimum distance to all road segments in the search area;
- Step 410 selecting the minimum distance; and
- Step 412 calculating the angle of the corresponding road in relation to the co-ordinate system of the map. The calculation of the road angle is not needed for the simple embodiment discussed so far, but is utilised in further developed embodiments described below.

After the steps of the loop 406-412 has been performed on each particle the procedure is returned with result parameters, comprising map data base specific information, to the measurement update procedure.

Apart from performing the data access operations discussed above the map handling routines also comprises handling the update of the actual map database. The size of the map that is stored in the internal memory and operated on by the algorithm is limited by several factors. Therefore the system comprises functionality to indicate when the current map needs a refresh and to perform such an update without disturbing the real-time scheduling.

**Positioning Example**

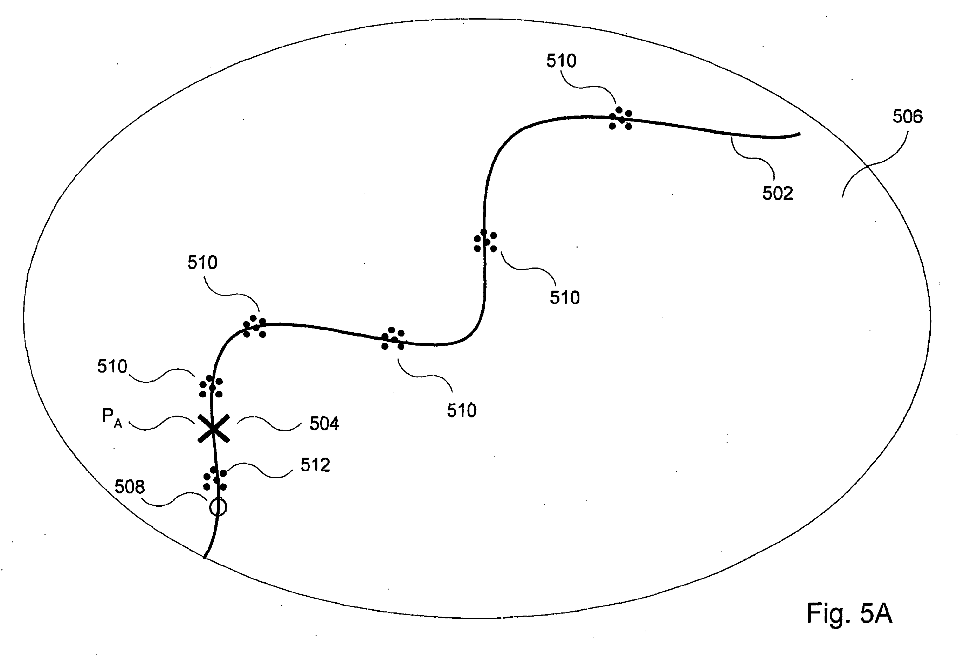

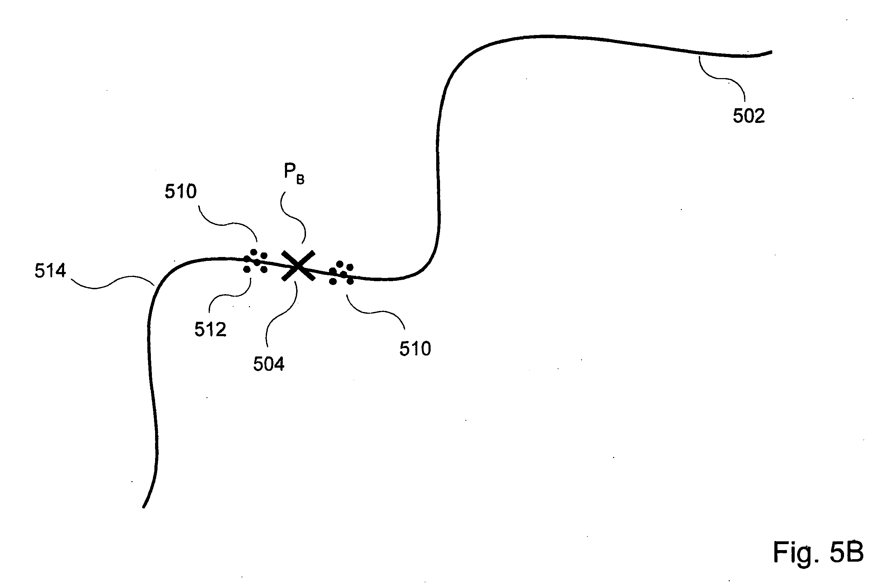

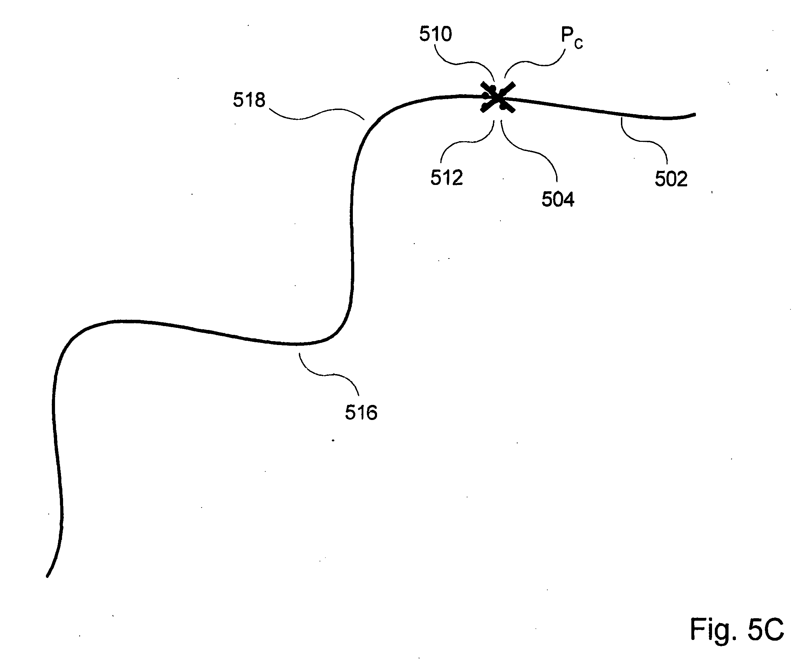

Fig 5a, 5b and 5c show on a schematic map an example of the inventive positioning system in operation. Fig 5a,5b,5c depicts a map with the topology of a path section 502, for example a road comprising bends and straight portions. A movable object 504, for example a vehicle, has an initial position PA on the path. An initial position indication 506 in the shape of an area or a number of possible position indications, or as in some embodiments even a substantially exact initial position indication, is inputted as start information. Dependent on the initial position indication 506 the currently relevant map information is retrieved from a map database or some other map information source. Based on an application specific predetermined assumption or rule, for example that the true position of the movable object is on a path or a road, a number of possible position indications are extracted from the map information. In this example the possible position indications are positions on the current road portion 502, which in the figure is exemplified by one point on the road denoted 508. Thus, the possible position indications are coinciding with positions on the part of the road portions or are close to the road portions that are situated within the area of or the vicinity of the initial position indication 506.

As the movable object moves along the path 502 the positioning system operates collecting state characteristic parameter values from for example relative position sensors or inertial sensors of the movable object. Dependent on the state characteristic parameter values a relative position indication is calculated relative to the initial position indication, which preferably is used to delimit the number of possible position indications. Further, a number of position estimate candidates 510 are calculated dependent on the possible position indications and resulting in a number of clusters of such position estimate candidates 510 being substantially positioned close to the road at various distances from the true position of the movable object. Furthermore, these candidates are in different embodiments exactly or substantially corresponding to the possible position indications on the road. These candidates are exemplified in Fig 5a,5b,5c as clusters of dots 510. Each position estimate candidate is then in accordance with predetermined criteria compared with one or more selected possible position indications, and a number of position estimate candidates are discarded and other are maintained dependent on a predetermined rule. A position estimate 512 is then calculated dependent on the state characteristic parameter values or is selected among the position estimate candidates in accordance with a predetermined position estimate selection rule, for example the candidate having the shortest distance to the road. Other more complex selection rules, for example involving more than one candidate are also conceivable.

Preferably, new position estimate candidates or selections of the previous candidates are repeatedly obtained, retrieved or generated with a selectable periodicity, for example once in each estimation cycle. There are different possible ways of obtaining new position estimate candidates, for example each time randomly sampling a number, e.g. 100, of new candidates within a specific range from the path. Similarly, a new set of possible position indications 508 is repeatedly extracted from the map information, which if needed is repeatedly updated along with the movement of the movable object.

Distinct features along the path, for example bends or curves, usually narrows the number of possible position indications and successively improves the calculated position estimate. Conversely, a movement along in-distinctive path portions such as straight paths generates little additional information to the estimation sequence and the calculation a position estimation may in that part not involve an improvement. Fig 5b shows the movable object 504 in a true position PB a distance down the followed path 502. At this stage of operation the movable object has passed a distinctive road feature in the shape of a first bend 514 and the number of position estimate candidates have been reduced to a few clusters closer to the true position PB. A calculated or selected position indication estimate 512 is here closer to the true positions as well. In Fig 5C, the movable object situated at a true position 44 has passed a second distinct road feature 518. The position estimate candidates 510 are reduced to a limited number in a cluster around the true position PC and a position estimate 512 is calculated to a position estimate that has converged to a position indication very close to the true position PC. Simulation and tests show that at this stage the position estimate obtained in accordance with the invention has a smaller error than a position indication obtained by normal GPS positioning.

**Further Developed Embodiment of the Positioning System**

In the following section a further developed embodiment of the invention and a more detailed description of the algorithm will be presented. This involves extensions of the state space model and additional features. The details presented in this section applies to the PF implementation.

Estimation of the heading angle:

The simple state space model used in the previous sections implicitly assumes that the true heading angle of the vehicle is known and included in the DRS output. This is however not always realistic, since a direct measurement of the absolute heading is usually not provided by a DRS . In practical implementations the invention comprises dealing with relative heading angle changes or yaw rate measurements. This entails a modified state space model wherein the heading angle is estimated as well.

State space model:

By introducing the heading angle as a new state variable, this embodiment of the state space model can be written as follows

| State variables | |
|---|---|
| $x_t$ | Position vector |
| $\psi_t$ | Heading angle (Yaw angle) |

$$\begin{cases} x_{t+1} = x_t + f(\psi_t, \Delta s) + w_t^x \\ \psi_{t+1} = \psi_t + \Delta\psi + w_t^\psi \end{cases},$$

$$(14)$$

where $f(\psi_t, u_s)$ is a coordinate transformation between the DRS frame and the map frame. An additional measurement equation is introduced to deal with angular information:

$$\begin{cases} y_t^1 = h(x_t) + e_t^1 \\ y_t^2 = \phi(\psi_t, x_t) + e_t^2 \end{cases}.$$

$$(15)$$

The following notation is introduced above: $\Delta s = T_s v_{x,m}$ and $\Delta\psi = T_s \dot\psi_m$. $v_{x,m}$ is the longitudinal velocity and $\dot\psi_m$ is the yaw rate measured by the DRS . $T_s$ is the sample period.

The two functions $h$ and $\phi$ are non-linear functions modelling the spatial information, i.e. the linear and the angular information, respectively, contained in the map.

Estimation of sensor errors:

The DRS measurements $v_{x,m}$ and $\dot\psi_m$, usually suffer from additive errors such as noise and offsets. In the model presented so far, it is assumed that these can be modelled with white noise processes. In order to improve the robustness of the filter, these sensor models are audited resulting in a further extension of the state space model.

Sensor models:

The embodiment described in this section assumes that the only sensors available for gaining information about linear and angular motions of the vehicle are the, normally already existing, ABS wheel speed sensors. However, it should be understood that other sensor configurations can be used, and that similar models can be derived for such cases.

The ABS sensors measure the angular velocity, $\omega$, of each wheel. If the true wheel radius is r, the linear velocity of the wheel is

$$v = \omega r .$$

$$(16)$$

In the sequel the index convention will be such that rl means rear left wheel, *fr* means front right etc.

The yaw rate, $\dot\psi$, can be calculated from the non-driven rear wheel speeds (this applies to a front wheel driven vehicle, but can be modified to fit in other configurations)

$$\dot\Psi = \frac{v_{rr} - v_{rl}}{L},$$

$$(17)$$

where L is the rear wheel axle length. By plugging (16) into (17) we get

$$\dot{\Psi} = \frac{\omega_{rr}r_{rr} - \omega_{rl}r_{rl}}{L}.$$

$$(18)$$

If the wheel radii are known apart from an offset (caused by e.g. different tire pressure) the true wheel radii can be written

$$r_{rr} = r_n + \delta_r$$

$$(19a)$$

$$r_{rl} = r_n + \delta_r + \delta$$

$$(19b)$$

where $r_n$ is the nominal wheel radius, $\delta_r$ is an absolute error (offset) and $\delta$ is defined as $\delta = r_{rl} - r_{rr}$ i.e. the wheel radii difference between left and right rear wheel.
If (19) is inserted into (18) we get

$$\dot{\Psi} = \frac{\omega_{rr} - \omega_{rl}}{L}r_n + \frac{\omega_{rr} - \omega_{rl}}{L}\delta_r - \frac{\omega_{rl}}{L}\delta.$$

$$(20)$$

If the middle term is assumed to be small and if we use

$$\omega_{rl} \approx \frac{\omega_{rr} + \omega_{rl}}{2} = \frac{v_{x,m}}{r_n},$$

$$(21)$$

where $v_{x,m}$ denotes the nominal ("measured") longitudinal velocity, we obtain

$$\dot{\Psi} \approx \dot{\Psi}_m - \frac{v_{x,m}}{r_n L}\delta$$

$$(22)$$

Here $\dot{\psi}_m$ denotes the nominal yaw rate,

$$\dot{\Psi}_m = \frac{\omega_{rr} - \omega_{rl}}{L}r_n,$$

which can be calculated from the measured angular rates and the nominal wheel radius.
The longitudinal velocity can be written as

$$v_x = \frac{v_{rr} + v_{rl}}{2}.$$

Again using (16) and (19) we get

$$v_x = \frac{\omega_{rr} + \omega_{rl}}{2} r_n + \frac{\omega_{rr} + \omega_{rl}}{2} \delta_r + \frac{\omega_{rl}}{2} \delta$$

$$(23)$$

Using (21) this can be approximated by

$$v_x \approx v_{x,m} + \frac{v_{x,m}}{r_n} \delta_r + \frac{v_{x,m}}{2r_n} \delta = v_{x,m}(1 + \frac{\delta_r}{r_n} + \frac{\delta}{2r_n}).$$

$$(24)$$

State space model:

By introducing two new state variables, the further developed state space model can be written as follows

| State variables | |
| --- | --- |
| $x_t$ | Position vector |
| $\psi_t$ | Heading angle (Yaw angle) |
| $\delta_{r,t}$ | Rear wheel radii offset |
| $\delta_t$ | Absolute rear wheel radii difference |

$$\begin{cases} x_{t+1} = x_t + f\left(\psi_t, \Delta s\left[1 + \frac{1}{r_n}(\delta_r + \frac{\delta}{2})\right]\right) + w_t^x \\ \psi_{t+1} = \psi_t + \Delta\psi + \frac{\Delta s}{r_n L}\delta + w_t^\psi \\ \delta_{r,t+1} = \delta_{r,t} + w_t^{\delta_r} \\ \delta_{t+1} = \delta_t + w_t^\delta \end{cases}, $$

$$(25)$$

where $f(\psi_t, u_s)$ is a coordinate transformation.

$$\begin{cases} y_t^1 = h(x_t) + e_t^1 \\ y_t^2 = \phi(\psi_t, x_t) + e_t^2 \end{cases}$$

$$(26)$$

Initialisation:

Since the algorithm is based on probabilistic inference, it is valuable to include as much prior knowledge about the position of the vehicle as possible. During the convergence process, it is important to limit the search area, i.e. to have a rough idea about the initial location of the vehicle. This can be obtained e.g. by using positioning services in a cellular network, like GSM. When the base stations control the communication between handsets in the network, rough position estimates (areas) are used to deduce how to distribute transmission power. These areas can be retrieved from a Mobile Positioning Service (MPS) and forwarded to the inventive positioning system in order to define the initial search area.

Another possibility used in some embodiments is to use a position indication from a GPS receiver, along with a sufficiently large confidence region, to limit the search area. However, this of course implies that a GPS receiver is included or communicatively coupled to the system.

Furthermore it is possible to initialise the search area manually, if the approximate starting location is known, or by specifying an absolute position. The latter might be the case if the system is used in public transports, taxi services or car rental services. Then the absolute position can be provided by a transponder when the vehicle passes a known location, e.g. the gates to the garage driveway or another fixed station as exemplified above.

The initial search area serves two purposes: Firstly it defines the extension of the prior distribution, i.e. the area that has to be populated with particles, and secondly it limits the amount of map data that has to be processed.

When GSM positioning is used for initialisation, the procedure is as follows:

- An area is requested from MPS.
- The area is used to model the prior distribution function.
- Samples (particles) are drawn from the prior.
- The filtering starts using a limited map, chosen with respect to the MPS area.

When the system is started manually basically the same steps as in the GSM case are used except that the user specifies the initial search area. Alternatively an external source or the user can be used to pinpoint the absolute position. Even in such a case it might be preferred to use a smaller area centred at the given position to ensure robustness of the system.

When GPS is used for initialisation, the procedure is as follows:

- A fixed position is requested from GPS.
- The fixed position is used, along with confidence parameters, to model the prior distribution function.
- Samples (particles) are drawn from the prior.
- The filtering starts using a limited map, chosen with respect to the GPS fix and the confidence parameters.

## Additional Features of Embodiments

The main tuning parameters of the particle filter PF are the process and measurement noise. Here lies the information about how data should be fused into the algorithm. The process noise should reflect the actual error/uncertainty in the relative displacement (i.e. the inertial sensor signals), but has also an important role in order to prevent unwanted particle clustering. This phenomenon arises when the particle swarm degenerates to multiple copies of only a few distinct samples, which leads to poor exploration of the state space. By adding an artificial *jittering* noise or by exaggerating the process noise, the particles are separated and the "sticky" tendency is reduced.

Some embodiments of the invention comprises steps or functions devised to spread the particles. During the initial phase of the execution, it is more important to maintain an efficient exploration of the state space, rather than using physically correct models for measurement noise and other model parameters. This means that it might be necessary to "sacrifice" particles to ensure that the cloud of particles is well dispersed. There are several ways of achieving a more uniform particle density. One way is to loosen the punishment on measurement errors, i.e. to increase the measurement noise. Another way is to spread particles along the directions of the roads. The latter can be done by correlating the process noise components to the heading angle of each particle and exaggerating the variance. This procedure will corrupt the individual particle, but hopefully it will make sure that the true state survives the initial phase.

For performance reasons it is sometimes fruitful to modify the algorithm during a few recursions. For example it is sometimes beneficial to change the noise variance on certain conditions. Another modification is to turn off some of the measurements during a single measurement update. This could be useful when the vehicle is making a sharp turn in a crossroads and the ambiguity in the road angle is large. In such a case the angular information provided by the map should not be relied upon.

Since the characteristics of the convergence process differ from those of the post-convergence filtering, it is in some embodiments provided for changing the filtering strategy when convergence is reached. This event is referred to as a *mode transition* and is controlled by a certain condition. For example, two modes or more can be used. If, for example, the vehicle starts driving straight ahead, one mode is to focus on distributing the particles along the straight ahead roads. When the vehicle makes a sharp turn, the particles are usually concentrated on certain areas of the map, i.e. the cloud has transformed into clusters close to locations on the map where it is possible to make the current type of turn. Now, the main task is no longer to ensure that the particles are well distributed, and therefore a transition to a second mode with less spreading might be appropriate. After further driving, all but one cluster have died out and the condition for convergence is fulfilled. Then a second change of mode (to the post-convergence mode) can be performed.

In order to increase the PF reliability and robustness it should be accompanied by divergence surveillance, which should be able to tell whether the filter has diverged or not within a reasonable time and with a low false alarm rate. One way of solving this is to use a change detector on some suitable quantity. If divergence is detected, the filter should perform a soft reset.

As has been mentioned above, different embodiments are combined with GPS positioning. An interesting application of map-aided positioning in accordance with the invention is to use it together with a conventional GPS in order to improve accuracy, reliability and possibly also bandwidth. The natural way of merging these two positioning techniques is to utilise the sensor fusion structure of the PF and introduce the GPS position as an extra measurement. Furthermore, this measurement should only be enabled when the GPS fix is reliable and therefore information about timing and integrity should be available.

It should be understood that the system according to the invention may be implemented on a number of different (mobile) platforms. Hence the positioning system can run on, for example, a portable or handheld PC itself constituting the movable object or having an interface to a movable object such as a vehicle/robot, giving the user increased freedom to choose which platform to use. Thus the user does not have to choose the platform pre-installed or recommended by the vehicle/robot manufacturer. Further, the positioning system cost is likely to be considerably reduced due to the increased competition among the suppliers of such platforms. Thus the invention facilitates more general implementation possibilities than current navigation systems, whereby the positioning system becomes a portable software system rather than a hardware system. Further, this opens up for other mobile positioning services than positioning for vehicles such as in-door positioning (for robots).

It should also be noted that the system according to the invention may be integrated with the standard sensor suite in the vehicle/robot (e.g. wheel speed sensors, steering angle sensors, and accelerometers) and be used by an on-board computer keeping track of service intervals, driving style, average mileage etc. It can also be used in so-called self-calibrating sensors e.g. to remove offsets and drifts in yaw rate gyros and accelerometer.

## Claims

1. A positioning method for determining the position of a wheeled vehicle on a road in a road network, comprising the steps of:

   receiving as an input an initial position indication;
   receiving as an input topographic information representing a road map dependent on said initial position indication, said topographic information including a plurality of possible position indications being determined dependent on an assumption that the true position of the vehicle is on a road or path in said road network limiting the set of possible position indications;
   receiving as an input a moveable object state characteristic parameter value received from a wheel speed sensor;
   calculating a relative position indication relative to said initial position indication dependent on said wheeled vehicle state characteristic value;
   generating a plurality of position estimate candidates dependent on said possible position indications and on said relative position indication;
   calculating a probability density for the position of said wheeled vehicle;
   **characterised in the step of**
   calculating a position estimate by recursively estimating in a non-linear filtering algorithm the conditional probability density for the position of said wheeled vehicle dependent on said position estimate candidates and dependent on a predetermined selection rule based on a predetermined relation between said position estimate candidates and a road in said road map.

2. A positioning apparatus (18) for determining the position of a wheeled vehicle on a road in a road network, comprising:

   an input (23) for an initial position indication;
   an input (27) for topographic information representing a road map dependent on said initial position indication, said topographic information including a plurality of possible position indications being determined dependent on an assumption that the true position of the vehicle is on a road or path in said road network limiting the set of possible position indications;
   an input (21) for a moveable object state characteristic parameter value received from a wheel speed sensor (20);
   a calculation stage (120) configured to calculate a relative position indication relative to said initial position indication dependent on said wheeled vehicle state characteristic value;

a calculation stage (26) configured to generate a plurality of position estimate candidates dependent on a said possible position indications and on said relative position indication;

a calculation stage (130) configured to calculate a probability density for the position of said wheeled vehicle;

**characterised in**

a calculation stage (26) configured to calculate a position estimate by recursively estimating in a non-linear filtering algorithm the conditional probability density for the position of said wheeled vehicle dependent on said position estimate candidates and dependent on a predetermined selection rule based on a predetermined relation between said position estimate candidates and a road in said road map.

3. The positioning method or apparatus as recited in any of the preceding claims, wherein the initial position is indicated as a limited geographical area.

4. The positioning method or apparatus as recited in any of the preceding claims, wherein the initial position indication is obtained from a wirelessly communicated positioning service.

5. The positioning method or apparatus as recited in any of the preceding claims, wherein the initial position indication is obtained from a GPS receiver.

6. The positioning method or apparatus as recited in any of the preceding claims, wherein the initial position is input manually.

7. The positioning method or apparatus as recited in any of the preceding claims, wherein the initial position indication is obtained via a transponder situated at a fixed location.

8. The positioning method or apparatus as recited in any of the preceding claims, wherein said topographic information is obtained from map information of a map information source.

9. The positioning method or apparatus as recited in claim 7, wherein said map information source is a map database stored on a data storage.

10. The positioning method or apparatus as recited in claim 7, wherein said map information is received from a remote map source.

11. The positioning method or apparatus as recited in any of the preceding claims, wherein said state characteristic parameter values are received from a relative position sensor of the wheeled vehicle.

12. The positioning method or apparatus as recited in any of the preceding claims, wherein said state characteristic parameter values are received from an inertial sensor of the wheeled vehicle.

13. The positioning method or apparatus as recited in any of the preceding claims, wherein said relative position indication is calculated as the distance and/or the direction the wheeled vehicle has moved from the initial position indication.

14. The positioning method or apparatus as recited in any of the preceding claims, wherein said generation of position estimate candidates comprises the step of repeatedly selecting a limited set among current position estimate candidates.

15. The positioning method or apparatus as recited in any of the preceding claims, wherein said generation of position estimate candidates comprises the step of randomly selecting position candidates.

16. The positioning method or apparatus as recited in any of the preceding claims, wherein said position estimate indication is selected as the position estimate candidate having the shortest distance from one of the currently possible position indications.

17. The positioning method or apparatus as recited in any of the preceding claims, wherein said calculation of position estimate candidates is performed by means of an adaptive filter.

18. The positioning method or apparatus as recited in any of the preceding claims, wherein said wheeled vehicle is a robot.

**19.** The positioning method or apparatus as recited in any of the preceding claims, being configured to implement map-matching in a GPS based positioning/navigation system.

**20.** The positioning method or apparatus as recited in any of the preceding claims, being configured to implement vehicle positioning using MPS.

**21.** The positioning method or apparatus as recited in any of the preceding claims, being configured to monitor the performance of a GPS based navigation system.

**22.** The positioning method or apparatus as recited in any of the preceding claims, being configured to monitor a navigation data sensor, such as an INS or an RDS sensor.

**23.** A computer program product comprising computer program code portions configured to direct a data processing system to perform the steps as recited in any of the preceding method claims.

**Patentansprüche**

**1.** Ein Positionierungsverfahren zur Bestimmung der Position eines Radfahrzeugs auf einer Straße in einem Straßennetz, die Schritte umfassend:

Empfangen einer Anfangspositionsangabe als Eingangswert;
Empfangen von topographischen Daten als Eingangswert, die eine Straßenkarte in Abhängigkeit von der Anfangspositionsangabe darstellen, wobei die topographischen Daten eine Vielzahl möglicher Positionsangaben enthalten, die in Abhängigkeit einer Annahme, dass die wahre Position des Fahrzeugs auf einer Straße oder einem Weg in dem Straßennetz ist, bestimmt werden, wodurch der Satz möglicher Positionsangaben begrenzt ist;
Empfangen eines charakteristischen Zustandparameterwerts für ein bewegliches Objekt als Eingangswert, der von einem Radgeschwindigkeitssensor empfangen wird;
Errechnen einer relativen Positionsangabe relativ zu der Anfangspositionsangabe in Abhängigkeit des charakteristischen Zustandwerts des Radfahrzeugs;
Erzeugen einer Vielzahl von Positionsabschätzungskandidaten in Abhängigkeit von den möglichen Positionsangaben und der relativen Positionsangabe;
Errechnen einer Wahrscheinlichkeitsdichte für die Position des Radfahrzeugs;
**gekennzeichnet durch den Schritt**
Errechnen einer Positionsabschätzung **durch** rekursives Abschätzen der bedingten Wahrscheinlichkeitsdichte für die Position des Radfahrzeugs mit einem nicht linearen Filteralgorithmus in Abhängigkeit von den Positionsabschätzungskandidaten und in Abhängigkeit einer vorbestimmten Auswahlregel basierend auf einer vorbestimmten Beziehung zwischen den Positionsabschätzungskandidaten und einer Straße in der Straßenkarte.

**2.** Positionierungsvorrichtung (18) zur Bestimmung der Position eines Radfahrzeugs auf einer Straße in einem Straßennetz, umfassend:

eine Eingabe (23) für eine Anfangspositionsangabe;
eine Eingabe (27) für topographische Daten, die eine Straßenkarte in Abhängigkeit von der Anfangspositionsangabe darstellen, wobei die topographischen Daten eine Vielzahl möglicher Positionsangaben enthalten, die in Abhängigkeit von einer Annahme, dass die wahre Position des Fahrzeugs auf einer Straße oder einem Weg in dem Straßennetz ist, bestimmt werden, was den Satz an möglichen Positionsangaben begrenzt;
eine Eingabe (21) für einen charakteristischen Zustandparameterwert eines beweglichen Objekts, der von einem Radgeschwindigkeitssensor (20) empfangen wird;
eine Berechnungseinheit (120), eingerichtet zur Berechnung einer relativen Positionsangabe relativ zu der Anfangspositionsangabe in Abhängigkeit von dem charakteristischen Zustandwert des Radfahrzeugs;
eine Berechnungseinheit (26), eingerichtet, um eine Vielzahl von Positionsabschätzungskandidaten in Abhängigkeit von den möglichen Positionsangaben und von der relativen Positionsangabe zu erzeugen;
eine Berechnungseinheit (130), eingerichtet zur Berechnung einer Wahrscheinlichkeitsdichte für die Position des Radfahrzeugs;
**gekennzeichnet durch**
eine Berechnungseinheit (26), eingerichtet um eine Positionsabschätzung **durch** rekursives Abschätzen der bedingten Wahrscheinlichkeitsdichte für die Position des Radfahrzeugs mit einem nicht-linearen Filteralgorithmus zu berechnen, in Abhängigkeit von den Positionsabschätzungskandidaten und in Abhängigkeit von einer vorbestimmten Auswahlregel basierend auf einer vorbestimmten Beziehung zwischen den Positionsabschätzungskandidaten und einer Straße in der Straßenkarte.

3. Das Positionierungsverfahren oder die Vorrichtung nach einem der vorangehenden Ansprüche, wobei die Anfangsposition als begrenzter geographischer Bereich angezeigt wird.

4. Das Positionierungsverfahren oder die Vorrichtung nach einem der vorangehenden Ansprüche, wobei die Anfangspositionsangabe von einem drahtlos übermittelten Positionierungsdienst gewonnen wird.

5. Das Positionierungsverfahren oder die Vorrichtung nach einem der vorangehenden Ansprüche, wobei die Anfangspositionsangabe von einem GPS-Empfänger gewonnen wird.

6. Das Positionierungsverfahren oder die Vorrichtung nach einem der vorangehenden Ansprüche, wobei die Anfangsposition manuell eingegeben wird.

7. Das Positionierungsverfahren oder die Vorrichtung nach einem der vorangehenden Ansprüche, wobei die Anfangspositionsangabe über einen sich an einem festen Ort befindlichen Transponder gewonnen wird.

8. Das Positionierungsverfahren oder die Vorrichtung nach einem der vorangehenden Ansprüche, wobei die topographischen Daten von Kartendaten einer Kartendatenquelle gewonnen werden.

9. Das Positionierungsverfahren oder die Vorrichtung nach Anspruch 7, wobei die Karteninformationsquelle eine in einem Datenspeicher gespeicherte Kartendatenbank ist.

10. Das Positionierungsverfahren oder die Vorrichtung nach Anspruch 7, wobei die Kartendaten von einer entfernten Kartenquelle empfangen werden.

11. Das Positionierungsverfahren oder die Vorrichtung nach einem der vorangehenden Ansprüche, wobei die charakteristischen Zustandsparameterwerte von einem Relativpositionssensor des Radfahrzeugs gewonnen werden.

12. Das Positionierungsverfahren oder die Vorrichtung nach einem der vorangehenden Ansprüche, wobei die charakteristischen Zustandsparameterwerte von einem Trägheitssensor des Radfahrzeugs empfangen werden.

13. Das Positionierungsverfahren oder die Vorrichtung nach einem der vorangehenden Ansprüche, wobei die relative Positionsangabe berechnet wird als die Entfernung und/oder die Richtung, in die sich das Radfahrzeug von seiner Anfangspositionsangabe aus bewegt hat.

14. Das Positionierungsverfahren oder die Vorrichtung nach einem der vorangehenden Ansprüche, wobei die Erzeugung der Positionsabschätzungskandidaten den Schritt des wiederholten Auswählens eines beschränkten Satzes unter den momentanen Positionsabschätzungskandidaten umfasst.

15. Das Positionierungsverfahren oder die Vorrichtung nach einem der vorangehenden Ansprüche, wobei die Erzeugung der Positionsabschätzungskandidaten den Schritt des zufälligen Auswählens von Positionskandidaten umfasst.

16. Das Positionierungsverfahren oder die Vorrichtung nach einem der vorangehenden Ansprüche, wobei die Positionsabschätzungsangabe als der Positionsabschätzungskandidat gewählt wird, der die kürzeste Entfernung von einer der momentan möglichen Positionsangaben hat.

17. Das Positionierungsverfahren oder die Vorrichtung nach einem der vorangehenden Ansprüche, wobei die Berechnung der Positionsabschätzungskandidaten mittels eines adaptiven Filters durchgeführt wird.

18. Das Positionierungsverfahren oder die Vorrichtung nach einem der vorangehenden Ansprüche, wobei das Radfahrzeug ein Roboter ist.

19. Das Positionierungsverfahren oder die Vorrichtung nach einem der vorangehenden Ansprüche, eingerichtet, um einen Kartenabgleich in einem GPS-basierten Positionierungs-/Navigationssystem durchzuführen.

**20.** Das Positionierungsverfahren oder die Vorrichtung nach einem der vorangehenden Ansprüche, eingerichtet, um eine Fahrzeugpositionierung unter der Verwendung von MPS durchzuführen.

**21.** Das Positionierungsverfahren oder die Vorrichtung nach einem der vorangehenden Ansprüche, eingerichtet, um die Leistung eines GPS-basierten Navigationssystems zu überwachen.

**22.** Das Positionierungsverfahren oder die Vorrichtung nach einem der vorangehenden Ansprüche, eingerichtet, um einen Navigationsdatensensor, wie einen INS oder einen RDS-Sensor, zu überwachen.

**23.** Ein Teile eines Computerprogrammcodes umfassendes computerprogrammiertes Produkt, eingerichtet um ein Datenverarbeitungssystem zu leiten, die Schritte eines der vorangehenden Verfahrensansprüche durchzuführen.

**Revendications**

**1.** Procédé de positionnement destiné à déterminer la position d'un véhicule à roues sur une route dans un réseau routier, comprenant les étapes consistant à :

recevoir en tant qu'entrée une indication de la position initiale ;
recevoir en tant qu'entrée des informations topographiques qui représentent une carte routière en fonction de ladite indication de la position initiale, lesdites informations topographiques comprenant une pluralité d'indications de position possibles déterminées en fonction d'une supposition selon laquelle la position véritable du véhicule se situe sur une route ou sur un chemin dans ledit réseau routier en limitant l'ensemble d'indications de position possibles ;
recevoir en tant qu'entrée une valeur de paramètre caractéristique d'état d'un objet mobile reçue en provenance d'un capteur de vitesse de roue ;
calculer une indication de la position relative par rapport à ladite indication de la position initiale en fonction de ladite valeur caractéristique d'état d'un véhicule à roues ;
générer une pluralité de candidates d'estimations de position en fonction desdites indications de position possibles et de ladite indication de la position relative ;
calculer une densité de probabilité de la position dudit véhicule à roues ;
**caractérisé par** l'étape consistant à :

calculer une estimation de la position en estimant de manière récursive dans un algorithme de filtrage non linéaire la densité de probabilité conditionnelle de la position dudit véhicule à roues en fonction desdites candidates d'estimations de position et en fonction d'une règle de sélection prédéterminée basée sur une relation prédéterminée entre lesdites candidates d'estimations de position et une route dans ladite carte routière.

**2.** Appareil de positionnement (18) destiné à déterminer la position d'un véhicule à roues sur une route dans un réseau routier, comprenant :

une entrée (23) pour une indication de la position initiale ;
une entrée (27) pour des informations topographiques qui représentent une carte routière en fonction de ladite indication de la position initiale, lesdites informations topographiques comprenant une pluralité d'indications de position possibles déterminées en fonction d'une supposition selon laquelle la position véritable du véhicule se situe sur une route ou sur un chemin dans ledit réseau routier en limitant l'ensemble d'indications de position possibles ;
une entrée (21) pour une valeur de paramètre caractéristique d'état d'un objet mobile reçue en provenance d'un capteur de vitesse de roue (20) ;
un étage de calcul (120) configuré pour calculer une indication de la position relative par rapport à ladite indication de la position initiale en fonction de ladite valeur caractéristique d'état d'un véhicule à roues ;
un étage de calcul (26) configuré pour générer une pluralité de candidates d'estimations de position en fonction desdites indications de position possibles et de ladite indication de la position relative ;
un étage de calcul (130) configuré pour calculer une densité de probabilité de la position dudit véhicule à roues ;
**caractérisé par** :

un étage de calcul (26) configuré pour calculer une estimation de position en estimant de manière récursive dans un algorithme de filtrage non linéaire la densité de probabilité conditionnelle de la position dudit véhicule à roues en fonction desdites candidates d'estimations de position et en fonction d'une règle de sélection prédéterminée basée sur une relation prédéterminée entre lesdites candidates d'estimations de position et une route dans ladite carte routière.

3. Procédé ou appareil de positionnement selon l'une quelconque des revendications précédentes, dans lequel la position initiale est indiquée en tant que zone géographique limitée.

4. Procédé ou appareil de positionnement selon l'une quelconque des revendications précédentes, dans lequel l'indication de la position initiale est obtenue à partir d'un service de positionnement communiqué de manière sans fil.

5. Procédé ou appareil de positionnement selon l'une quelconque des revendications précédentes, dans lequel l'indication de la position initiale est obtenue à partir d'un récepteur GPS.

6. Procédé ou appareil de positionnement selon l'une quelconque des revendications précédentes, dans lequel la position initiale est entrée manuellement.

7. Procédé ou appareil de positionnement selon l'une quelconque des revendications précédentes, dans lequel l'indication de la position initiale est obtenue par l'intermédiaire d'un transpondeur situé à un emplacement fixe.

8. Procédé ou appareil de positionnement selon l'une quelconque des revendications précédentes, dans lequel lesdites informations topographiques sont obtenues à partir d'informations cartographiques d'une source d'informations cartographiques.

9. Procédé ou appareil de positionnement selon la revendication 7, dans lequel ladite source d'informations cartographiques est une base de données cartographiques stockée dans un stockage de données.

10. Procédé ou appareil de positionnement selon la revendication 7, dans lequel lesdites informations cartographiques sont reçues en provenance d'une source cartographique distante.

11. Procédé ou appareil de positionnement selon l'une quelconque des revendications précédentes, dans lequel lesdites valeurs de paramètres caractéristiques d'état sont reçues en provenance d'un capteur de position relative du véhicule à roues.

12. Procédé ou appareil de positionnement selon l'une quelconque des revendications précédentes, dans lequel lesdites valeurs de paramètres caractéristiques d'état sont reçues en provenance d'un capteur inertiel du véhicule à roues.

13. Procédé ou appareil de positionnement selon l'une quelconque des revendications précédentes, dans lequel ladite indication de la position relative est calculée comme étant la distance et/ou la direction dont le véhicule à roues s'est déplacé à partir de l'indication de la position initiale.

14. Procédé ou appareil de positionnement selon l'une quelconque des revendications précédentes, dans lequel ladite génération des candidates d'estimations de position comprend l'étape consistant à sélectionner à plusieurs reprises un ensemble limité parmi les candidates d'estimations de position actuelles.

15. Procédé ou appareil de positionnement selon l'une quelconque des revendications précédentes, dans lequel ladite génération des candidates d'estimations de position comprend l'étape consistant à sélectionner de manière aléatoire les candidates de position.

16. Procédé ou appareil de positionnement selon l'une quelconque des revendications précédentes, dans lequel ladite indication d'estimation de la position est sélectionnée en tant que candidate d'estimation de position présentant la distance la plus courte à partir de l'une des indications de position possibles actuellement.

17. Procédé ou appareil de positionnement selon l'une quelconque des revendications précédentes, dans lequel ledit calcul des candidates d'estimations de position est effectué au moyen d'un filtre adaptatif.

18. Procédé ou appareil de positionnement selon l'une quelconque des revendications précédentes, dans lequel ledit véhicule à roues est un robot.

**19.** Procédé ou appareil de positionnement selon l'une quelconque des revendications précédentes, configuré pour mettre en application une mise en correspondance de carte dans un système de positionnement/de navigation basé sur un GPS.

**20.** Procédé ou appareil de positionnement selon l'une quelconque des revendications précédentes, configuré pour mettre en application un positionnement de véhicule en utilisant un MPS.

**21.** Procédé ou appareil de positionnement selon l'une quelconque des revendications précédentes, configuré pour surveiller les performances d'un système de navigation basé sur un GPS.

**22.** Procédé ou appareil de positionnement selon l'une quelconque des revendications précédentes, configuré pour surveiller un capteur de données de navigation, tel qu'un capteur INS ou RDS.

**23.** Produit programme informatique comprenant des parties de code de programme informatique configurées pour commander un système de traitement de données afin qu'il exécute les étapes selon l'une quelconque des revendications de procédé précédentes.

Fig. 1A

EP 1 332 336 B1

Fig. 1B

Fig. 1C

Fig. 3

300

301 MEASUREMENT UPDATE

302 CALCULATE ESTIMATE AND COVARIANCE

303 RESAMPLING NEEDED?

304 RESAMPLING — YES

NO

305 TIME UPDATE

Fig. 2

200

201 MEASUREMENT UPDATE

202 CALCULATE ESTIMATE AND COVARIANCE

204 TIME UPDATE

28

400

- CALL FROM MEASUREMENT UPDATE — 402
- LIMIT THE SIZE OF THE SEARCH AREA — 404
- FOR EACH PARTICLE — 406
- DONE
- CALCULATE MINIMUM DISTANCE TO ALL ROAD SEGMENTS IN SEARCH AREA — 408
- PICK THE MINIMUM DISTANCE — 410
- CALCULATE THE ANGLE OF THE CORRESPONDING ROAD — 412
- RETURN TO MEASUREMENT UPDATE — 414

Fig. 4

Fig. 5A

Fig. 5B

EP 1 332 336 B1

Fig. 5C

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 6041280 A, Kohli
- US 5774824 A, Streit
- US 4796191 A
- GB 2209414 A
- EP 0514887 A2
- EP 0875877 A2
- EP 0703435 A1
- EP 0276366 A1
- US 5862510 A
- EP 0487864 A1

**Non-patent literature cited in the description**

- **RUSSELL ENNS ; DARRYL MORRELL.** *Journal of Guidance, Control and Dynamics,* 1995, vol. 18 (6), 1444-1449